# EUROPÄISCHE PATENTANMELDUNG

(11) **EP 2 698 613 A2**
(43) Veröffentlichungstag der Anmeldung: **19.02.2014**
(21) Anmeldenummer: 13003515.7
(22) Anmeldetag: 11.07.2013
(51) Int. Cl.: G01F 23/00, G01F 23/22

(54) **Pegelrohr und Verfahren zur Messung des Wasserstands in einem Bohrloch**

(30) Priorität: 16.08.2012 DE 102012016196
(71) Anmelder: Esders GmbH, 49740 Haselünne (DE)
(72) Erfinder: Brockmann, Siegbert, 48531 Nordhorn (DE)
(74) Vertreter: Busse & Busse

(57) **Zusammenfassung**

Die vorliegende Erfindung bezieht sich auf an seinem unteren Ende offenes Pegelrohr (10) und ein Verfahren zur Messung des Wasserstands in einem Bohrloch (4) mit einem Pegelrohr (10).

Um eine Vorrichtung und ein Verfahren zu schaffen, mit dem eine einfache, zugleich aber auch hinreichend zuverlässige Pegelstandsmessung möglich ist, wird vorgeschlagen, dass das Pegelrohr (10) oder eine mit dem Pegelrohr (10) verbundene Verbindungsleitung (14) eine Ausströmöffnung (12) aufweist, im Pegelrohr (10), in der Verbindungsleitung (14) und/oder in der Ausströmöffnung (12) ein Massenstrommesser (16) angeordnet und der Massenstrommesser (16) mit einem Computer (18) verbunden ist, mit dem ein vom Massenstrommesser (16) ermitteltes Volumen von durchströmender Luft in einen Pegelstand (20) von Wasser (22) oder einer Suspension (24) in einem Bohrloch (4) umrechenbar ist (Fig. 1).

## Beschreibung

Die vorliegende Erfindung bezieht sich auf ein an seinem unteren Ende offenes Pegelrohr und auf ein Verfahren zur Messung des Wasserstands in einem Bohrloch mit einem Pegelrohr, das an seinem unteren Ende offen ist und dessen unteres Ende bis unter den Pegelstand des Wassers im Bohrloch reicht.

Für die Einbringung von Erdwärmesonden in den Boden ist es erforderlich, zunächst ein Bohrloch herzustellen, in das dann die Erdwärmesonde, beispielsweise ein Schlauch oder eine Rohrleitung, abgesenkt und positioniert werden kann. Nach erfolgter Positionierung wird die Erdwärmesonde mit Wasser gefüllt und dann verschlossen. Der Innendruck des Wassers in der Erdwärmesonde wird gemessen und registriert.

Für eine gute Übertragung von Wärmeenergie aus der Erdwärmesonde in den Boden oder aus dem Boden in das Wasser der Erdwärmesonde ist es erforderlich, nach dem Einbringen der Erdwärmesonde in das Bohrloch den Zwischenraum zwischen der Erdwärmesonde und den Seitenwänden des Bohrlochs zu verfüllen. Dazu wird eine Suspension über ein Verpressrohr in das Bohrloch gepumpt. Das Verpressrohr reicht dabei üblicherweise bis auf das untere Ende des Bohrlochs hinab, um eine vollständige Verfüllung sicherzustellen. Die in das Bohrloch gepresste Suspension drückt das im Bohrloch stehende Wasser nach oben, wenn sich Wasser im

Bohrloch befindet. Befindet sich kein Wasser im Bohrloch, verdrängt die Suspension im Bohrloch befindliche Luft. Üblicherweise wird die über das Verpressrohr in das Bohrloch eingebrachte Menge der Suspension ermittelt und dokumentiert. Durch die Messung des Pegelstandes während des Verpressens der Suspension soll kontrolliert werden, ob die Suspension tatsächlich das Bohrloch ausfüllt oder in Hohlräume im Boden abfließt, so dass die Verfüllung des Bohrlochs scheitert.

Parallel zu dem Verpressvorgang soll deshalb die Änderung des Wasserspiegels oder des Spiegels der Suspension, wenn kein Wasser im Bohrloch ist, im Bohrloch dokumentiert werden. Dazu wird vor dem Einteufen der Erdwärmesonde ein sogenanntes Lichtlot in das Bohrloch abgesenkt. Bei dem Lichtlot handelt es sich um einen an einem Maßband befestigten Sensor, der beispielsweise durch eine Leitfähigkeitsmessung das Erreichen des Wasserspiegels erkennt und signalisiert. Am Maßband kann dann der Pegelstand des Wassers im Bohrloch vor dem Einteufen der Erdwärmesonde abgelesen werden. Bei den bekannten Messtechniken wird auch beim nachfolgenden Verpressvorgang in zeitlichen Abständen mit dem Lichtlot der Wasserstand gemessen. Dies ist mit einem erhöhten Arbeitsaufwand verbunden, weil das Lichtlot immer wieder in das Bohrloch hinabgelassen und der Pegelstand abgelesen werden muss.

Als Alternative zur Pegelstandsmessung mit dem Lichtlot ist es auch bekannt, ein Pegelrohr zu verwenden, das an seinem unteren Ende offen und an seinem oberen Ende verschlossen ist. Das Pegelrohr wir so weit in das Bohrloch hinabgelassen, dass dessen unteres Ende bis unter den Pegelstand des Wassers oder der Suspension im Bohrloch reicht. Verändert sich der Pegelstand des Wassers oder der Suspension im Bohrloch, verändert sich auch der Luftdruck im Pegelrohr. Diese Druckveränderung kann gemessen und von einem Computer in einen neuen Pegelstand umgerechnet werden. Diese Pegelstandsmessung ist allerdings ungenau, weil die Druckveränderung auch durch andere Einflussfaktoren als die Veränderung des Pegelstands des Wassers im Bohrloch verursacht werden kann.

Es ist die Aufgabe der vorliegenden Erfindung, eine Vorrichtung und ein Verfahren zu schaffen, mit dem eine einfache, zugleich aber auch hinreichend zuverlässige Pegelstandsmessung möglich ist.

Die Aufgabe wird für eine gattungsgemäße Vorrichtung gelöst, indem das Pegelrohr oder eine mit dem Pegelrohr verbundene Verbindungsleitung eine Ausströmöffnung aufweist, im Pegelrohr, in der Verbindungsleitung und/oder in der Ausströmöffnung ein Massenstrommesser angeordnet und der Massenstrommesser mit einem Computer verbunden ist, mit dem ein vom Massenstrommesser ermitteltes Volumen von durchströmender Luft in einen Pegelstand von Wasser oder einer Suspension in einem Bohrloch umrechenbar ist.

Die Aufgabe wird für ein gattungsgemäßes Verfahren gelöst, indem das Pegelrohr eine Ausströmöffnung für aus dem Pegelrohr ausströmende Luft aufweist und in der Ausströmöffnung, einer Verbindungsleitung zwischen dem Pegelrohr und der Ausströmöffnung oder im Pegelrohr ein Massenstrommesser angeordnet ist, wobei mit dem Massenstrommesser das Volumen der durch das Pegelrohr und/oder die Verbindungsleitung strömenden Luft gemessen und mittels eines an den Massenstrommesser angeschlossenen Computers das vom Massenstrommesser gemessene Luftvolumen in einen Pegelstand des Wassers oder einer Suspension im Bohrloch umgerechnet und ausgegeben wird.

Beim Massenstrommesser handelt es sich um einen Sensor, der den Massenstrom von Gasen misst. Verändert sich der Pegelstand des Wassers im Rohr, wird auch die auf dem Wasser im Rohr stehende Luftsäule bewegt. Diese Bewegung der Luft wird mit dem Massenstrommesser ausgewertet. Ein geeigneter Massenstrommesser kann beispielsweise mit dem Differenzdruck-Messverfahren arbeiten, bei dem der Differenzdruck, der statische Druck und die Temperatur über entsprechende Sensoren bis zu 4.000 mal pro Sekunde gemessen und von einem Prozessor zu einem Massenstromsignal verrechnet und als solches ausgegeben werden. Mit einem solchen Massenstrommesser können sehr genaue Strömungsvolumina von Luft ermittelt werden, die durch die Ausströmöffnung hindurch strömt. Neben dem Differenzdruck-Messverfahren können auch andere geeignete Meßmethoden und Sensoren eingesetzt werden, um die Volumina der durch die Ausströmöffnung hindurch strömenden Luft zu ermitteln.

Bei einem bekannten Innendurchmesser des Pegelrohres kann das in einem Zeitintervall ermittelte Luftvolumen, das aus dem Pegelrohr durch die Ausströmöffnung heraus- oder auch in dieses hineinströmt, leicht in einen Höhenwert umgerechnet werden, um den sich der Pegelstand des Wassers oder der Suspension, wenn sich im Bohrloch kein Wasser befindet, im Bohrloch seit der letzten Messung verändert hat. Der ermittelte Höhenwert kann dem letzten ermittelten Pegelstand hinzu addiert oder von diesem abgezogen werden, je nachdem, ob dieser positiv oder negativ ist. Daraus errechnet sich ein aktueller neuer Ist-Wert für den Pegelstand. Da der neue Pegelstand nur über die Volumenveränderung der im Pegelrohr vorhandenen Luft ermittelt worden ist, bleibt der gemessene Pegelstand frei von Messfehlern aus Druckschwankungen im Wasser beziehungsweise der Suspension und im Pegelrohr. Der Druckwert der Luftsäule im Pegelrohr entspricht immer dem Druckwert der Außenluft, da eine eventuelle Druckdifferenz sofort über die Ausströmöffnung ausgeglichen wird. Da der Massenstrommesser auch den statischen Luftdruck bei der Bestimmung der Luftvolumina mit berücksichtigt, bleiben auch Druckschwankungen in der Atmosphäre ohne Auswirkung auf das Messergebnis.

Das erfindungsgemäß ermittelte Messergebnis ist deshalb insgesamt genauer als bei den herkömmlichen Verfahren. Es ist auch nicht erforderlich, laufend ein Lichtlot in das Bohrloch herabzulassen. Die Messung kann kontinuierlich oder auch in zeitlichen Abständen erfolgen, ohne dass dafür aufwendige Zusatzarbeiten erforderlich wären.

Mit dem Begriff des Computers ist eine elektronische Recheneinheit gemeint, in der Daten digital verarbeitet werden. Der Computer kann so beispielsweise auch ein prozessorgesteuertes Messgerät oder bloß ein einfacher Computerchip mit einer darauf gespeicherten Software sein.

Durch den Abgleich des ermittelten Pegelstandes mit der Menge der in das Bohrloch gepumpten Suspension ist es möglich, mit großer Genauigkeit festzustellen, ob die in das Bohrloch gepumpte Suspension vollständig im Bohrloch verblieben oder möglicherweise in andere Bodenbereiche abgeflossen ist.

Nach einer Ausgestaltung der Erfindung ist am oberen Ende des Pegelrohres ein Sperrventil angeordnet. Mit dem Sperrventil kann die Luftströmung in das oder aus dem Pegelrohr gesperrt oder von der Durchströmmenge limitiert werden, wenn dies gewünscht ist.

Nach einer Ausgestaltung der Erfindung ist in den Computer ein Pegelstand als Schwellwert für die Ausgabe eines Alarmsignals eingebbar. Dazu weist der Computer entsprechende Eingabemittel zur Eingabe eines Schwellwertes auf. Stellt der Computer fest, dass ein aktuell ermittelter Pegelstand dem eingegebenen Schwellwert entspricht, gibt der Computer das Alarmsignal aus. Durch das Alarmsignal, das optisch und/oder akustisch ausgegeben werden kann, ist es möglich, einen Bediener des Verpressvorgangs der Suspension darauf aufmerksam zu machen, dass ein bestimmter Pegelstand des Wassers oder der Suspension erreicht ist. Der Bediener kann den Verpressvorgang stoppen, wenn ein gewünschter Maximalwert des Pegelstandes des Wassers oder der Suspension im Bohrloch erreicht ist oder bevor das im Bohrloch befindliche Wasser oder die Suspension an der Mündungsöffnung des Bohrlochs austritt.

Nach einer Ausgestaltung der Erfindung ist in den Computer ein Erstpegelstand eingebbar. Dazu weist der Computer entsprechende Eingabemittel zur Eingabe eines Erstpegelstandes auf. Durch die Eingabe eines zuvor gemessenen Erstpegelstandes in den Computer ist es möglich, ausgehend von einem zuerst gemessenen Erstpegeltand die volumetrisch ermittelten Pegelstandsveränderungen jeweils vom vorherigen Pegelstand abzuziehen oder zu diesem hinzuzuzählen, um einen neuen aktuellen Ist-Wert des absoluten Pegelstandes zu erhalten.

Nach einer Ausgestaltung der Erfindung weist der Computer einen Speicher, auf dem die jeweils ermittelten Pegelstände speicherbar sind, und/oder eine Ausgabeschnittstelle auf, über die die jeweils ermittelten Pegelstände ausgebbar sind. Über den Speicher ist eine Dokumentation der Pegelstände des Wassers oder der Suspension im Bohrloch möglich. Über die gespeicherten und/oder ausgegebenen Pegelstände kann auch zu einem späteren Zeitpunkt als dem Verpressen der Suspension noch nachgewiesen werden, wie sich der Pegelstand des Wassers im Verlauf eines Verpressvorgangs verändert hat.

Nach einer Ausgestaltung der Erfindung ist der Computer in einem Automatikmodus betreibbar. Dazu weist der Computer eine entsprechende Softwaresteuerung auf. Im Automatikmodus ermittelt der Computer laufend aktuelle Pegelstände und speichert diese im Speicher und/oder gibt diese über die Ausgabeschnittstelle an ein angeschlossenes Peripheriegerät weiter. Durch den Automatikmodus wird eine laufende Kontrolle und Steuerung der Messvorrichtung durch eine Bedienperson überflüssig. Die Erfindung soll nun anhand eines Ausführungsbeispiels näher beschrieben werden.

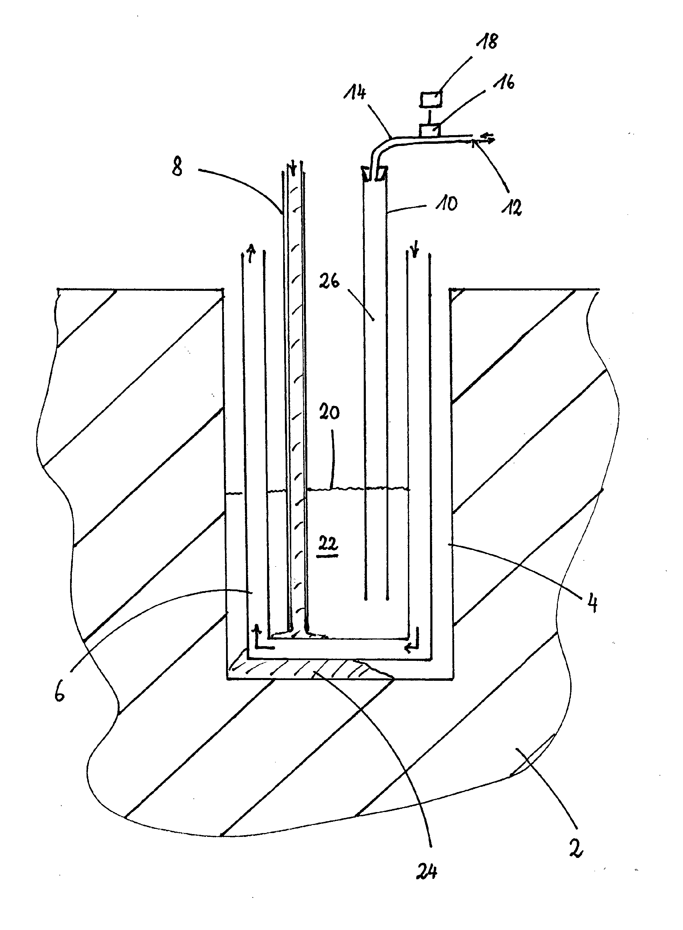

In der beigefügten Zeichnung befindet sich in einem Boden 2 ein Bohrloch 4. In das Bohrloch 4 ist eine Erdwärmesonde 6 eingebracht. Durch die Erdwärmesonde 6 kann ein Wärmeträgermedium wie beispielsweise Wasser fließen. Über ein Verpressrohr 8 kann eine Suspension 24 in das Bohrloch 4 eingepresst werden. Im Bohrloch 4 befindet sich auch das Pegelrohr 10.

In gezeigten Ausführungsbeispiel befindet sich die Ausströmöffnung 12 nicht direkt am oberen Ende des Pegelrohres 10, sondern am Ende einer Verbindungsleitung 14. An der Verbindungsleitung 14 ist ein Massenstrommesser 16 angeordnet, der die Volumina der durch die Verbindungsleitung 14 hindurch strömenden Luft ermittelt. Die vom Massenstrommesser 16 ermittelten Messwerte werden an den daran angeschlossenen Computer 18 übermittelt. Wird die Suspension 24 in das Bohrloch 4 gepresst, steigt der Pegelstand 20 des im Bohrloch 4 befindlichen Wassers 22 an. Befindet sich im Bohrloch kein Wasser 22, so steigt bei einem ordnungsgemäßen Verpressvorgang nur der Pegelstand der Suspension 24 an, die aber in gleicher Weise in das Pegelrohr 10 fließt wie das Wasser 22. Da das Pegelrohr 10 nach unten hin offen ist, verändert sich bei einer Veränderung des Pegelstandes 20 im Bohrloch 4 auch der Pegelstand des im Pegelrohr 10 befindlichen Wassers 22 oder der Suspension 24. Die auf dem Wasser stehende Luftsäule 26 wird bei einer Veränderung des Pegelstandes des Wassers 22 oder der Suspension 24 im Pegelrohr 10 ebenfalls bewegt, und die Bewegung wird vom Massenstrommesser 16 erfasst und gemessen.

Die vorstehende gegenständliche Beschreibung dient nur der exemplarischen Erläuterung der Erfindung. Die Erfindung ist nicht auf das Ausführungsbeispiel beschränkt, der Fachmann kann das Ausführungsbeispiel auf eine ihm als geeignete Weise abwandeln, um die Ausführung an einen konkreten Anwendungsfall anzupassen.

## Patentansprüche

1. An seinem unteren Ende offenes Pegelrohr (10), **dadurch gekennzeichnet, dass** das Pegelrohr (10) oder eine mit dem Pegelrohr (10) verbundene Verbindungsleitung (14) eine Ausströmöffnung (12) aufweist, im Pegelrohr(10), in der Verbindungsleitung (14) und/oder in der Ausströmöffnung (12) ein Massenstrommesser (16) angeordnet und der Massenstrommesser (16) mit einem Computer (18) verbunden ist, mit dem ein vom Massenstrommesser (16) ermitteltes Volumen von durchströmender Luft in einen Pegelstand (20) von Wasser (22) oder einer Suspension (24) in einem Bohrloch (4) umrechenbar ist.

2. Pegelrohr (10) nach Anspruch 1, **dadurch gekennzeichnet, dass** am oberen Ende des Pegelrohres (10) ein Sperrventil angeordnet ist.

3. Pegelrohr (10) nach Anspruch 1 oder 2, **dadurch gekennzeichnet, dass** in den Computer (18) ein Pegelstand (20) als Schwellwert für die Ausgabe eines Alarmsignals eingebbar ist.

4. Pegelrohr (10) nach einem der vorhergehenden Ansprüche, **dadurch gekennzeichnet, dass** in den Computer (18) ein Erstpegelstand (20) eingebbar ist.

5. Pegelrohr (10) nach einem der vorhergehenden Ansprüche, **dadurch gekennzeichnet, dass** der Computer (18) einen Speicher aufweist, auf dem die jeweils ermittelten Pegelstände speicherbar sind, und/oder eine Ausgabeschnittstelle aufweist, über die die jeweils ermittelten Pegelstände ausgebbar sind.

6. Pegelrohr (10) nach einem der vorhergehenden Ansprüche, **dadurch gekennzeichnet, dass** der Computer (18) in einem Automatikmodus betreibbar ist.

7. Verfahren zur Messung des Wasserstands (20) in einem Bohrloch (4) mit einem Pegelrohr (10), das an seinem unteren Ende offen ist und dessen unteres Ende bis unter den Pegelstand (20) des Wassers (22) im Bohrloch (4) reicht, **dadurch gekennzeichnet, dass** das Pegelrohr (10) eine Ausströmöffnung (12) für aus dem Pegelrohr (10) ausströmende Luft aufweist und in der Ausströmöffnung (12), einer Verbindungsleitung (14) zwischen dem Pegelrohr (10) und der Ausströmöffnung (12) oder im Pegelrohr (10) ein Massenstrommesser (16) angeordnet ist, wobei mit dem Massenstrommesser (16) das Volumen der durch das Pegelrohr (10) und/oder die Verbindungsleitung (14) strömenden Luft gemessen und mittels eines an den Massenstrommesser (16) angeschlossenen Computers (18) das vom Massenstrommesser (16) gemessene Luftvolumen in einen Pegelstand (20) des Wassers (22) oder einer Suspension (24) im Bohrloch (4) umgerechnet und ausgegeben wird.

8. Verfahren nach Anspruch 7, **dadurch gekennzeichnet, dass** das Verfahren Gebrauch macht von den Merkmalen eines oder mehrerer der Unteransprüche 2 bis 6.
